# EUROPÄISCHE PATENTSCHRIFT

(11) **EP 3 083 097 B1**
(45) Veröffentlichungstag und Bekanntmachung des Hinweises auf die Patenterteilung: **06.02.2019**
(21) Anmeldenummer: 14808842.0
(22) Anmeldetag: 01.12.2014
(51) Int. Cl.: B21D 43/05, F16B 21/16, B23Q 1/00, B23B 31/26

(54) **KUPPLUNGSSYSTEM**
COUPLING SYSTEM
SYSTÈME D'ACCOUPLEMENT

(30) Priorität: 18.12.2013 DE 102013021404
(43) Veröffentlichungstag der Anmeldung: 26.10.2016
(73) Patentinhaber: Ludwig Ehrhardt GmbH, 35321 Laubach (DE)
(72) Erfinder: GROSCHE, Frank, 57339 Erndtebrück (DE)
(74) Vertreter: v. Bezold & Partner Patentanwälte - PartG mbB
(86) Internationale Anmeldenummer: PCT/EP2014/003203
(87) Internationale Veröffentlichungsnummer: WO 2015/090513

(56) Entgegenhaltungen:
- EP-A2- 0 205 057
- EP-A2- 0 283 810
- WO-A1-2009/135552
- US-A- 2 637 576
- US-A- 4 655 489
- US-A- 4 661 009
- US-A- 5 272 900

## Beschreibung

Die Erfindung betrifft ein Kupplungssystem für eine Maschine gemäß dem Oberbegriff des Anspruchs 1 zur mechanischen Kupplung einer Kupplungseinrichtung an eine Gegenkupplungseinrichtung, insbesondere zur mechanischen Kupplung eines Positionierungsmechanismus an eine Greiferschiene.

Ein derartiges Kupplungssystem ist beispielsweise aus WO 2009/135552 A1 bekannt und dient in einer mechanischen Presse dazu, eine Positionierungseinrichtung lösbar mit einer Greiferschiene zu verbinden. Das Kupplungssystem weist hierbei eine Verriegelungseinrichtung auf, die eine mit der Positionierungseinrichtung verbundene Kupplungseinrichtung mit einer mit der Greiferschiene verbundenen Gegenkupplungseinrichtung verriegeln kann. Die Verriegelung erfolgt hierbei mittels Verriegelungskugeln, die von einem axial verschiebbaren Spannstift entweder in eine Verriegelungsposition gedrückt oder freigegeben werden. Zum Verriegeln bzw. Entriegeln muss der Spannstift hierbei also axial verschoben werden. Hierzu dient ein schwenkbarer Betätigungshebel, der ein Zahnrad dreht, das in eine entsprechende Verzahnung in dem Spannstift eingreift, so dass ein Schwenken des Betätigungshebels zu einer entsprechenden axialen Verschiebung des Spannstifts führt.

Bei dem Kupplungssystem gemäß WO 2009/135552 A2 kann die Entriegelung bewirkt werden, indem Kupplungseinrichtung und Gegenkupplungseinrichtung im zusammengekuppelten und verriegelten Zustand gemeinsam seitlich gegen einen Auslösevorsprung bewegt werden, so dass der Auslösevorsprung den Betätigungshebel schwenkt und dadurch das Kupplungssystem entriegelt. Allerdings ist hierbei zusätzlich zu der eigentlichen Kupplungsbewegung von Kupplungseinrichtung und Gegenkupplungseinrichtung eine Querbewegung erforderlich, um den Betätigungshebel gegen den Auslösevorsprung zu drücken.

Nachteilig an diesem bekannten Kupplungssystem ist der unbefriedigende Betrieb der Verriegelungseinrichtung.

Aus anderen Gebieten der Technik sind ebenfalls Kupplungssysteme bekannt. Beispielsweise offenbaren US 2 637 576 und US 4 655 480 eine sogenannte Push-Pull-Verriegelung für Möbel zur Verriegelung einer Möbelklappe an einem Möbelkorpus. Ferner offenbart DE 299 10 398 U1 eine Steinzange zum Greifen von Steinen.

Diese Druckschriften gehören jedoch zu völlig anderen technischen Gebieten und sind deshalb gattungsfremd.

Schließlich sind aus US-A-4 661 009, EP-A-283 810 und US-A-5 272 900 sogenannte Bajonettkupplungen bekannt, die dem Oberbegriff von Anspruch 1 entsprechen und ein Zusammenkuppeln bzw. Entkuppeln durch eine Drehbewegung ermöglichen. Diese bekannten Bajonettkupplungen ermöglichen jedoch noch kein einfaches Entriegeln bzw. Verriegeln.

Der Erfindung liegt deshalb die Aufgabe zugrunde, ein entsprechend verbessertes Kupplungssystem zu schaffen.

Diese Aufgabe wird durch ein erfindungsgemäßes Kupplungssystem gemäß dem unabhängigen Anspruch 1 gelöst.

Das erfindungsgemäße Kupplungssystem weist zunächst in Übereinstimmung mit dem bekannten Kupplungssystem eine Kupplungseinrichtung auf, die beispielsweise mit einem Positionierungsmechanismus verbunden werden kann, wie er beispielsweise aus der bereits eingangs zitierten Patentanmeldung WO 2009/135552 A1 bekannt ist.

Weiterhin umfasst das erfindungsgemäße Kupplungssystem in Übereinstimmung mit dem eingangs beschriebenen bekannten Kupplungssystem eine Gegenkupplungseinrichtung, die beispielsweise mit einer Greiferschiene verbunden werden kann, wie sie ebenfalls aus der bereits eingangs zitierten Patentanmeldung WO 2009/135552 A1 bekannt ist.

Das erfindungsgemäße Kupplungssystem ist jedoch nicht auf eine Verbindung eines Positionierungsmechanismus' mit einer Greiferschiene beschränkt. Vielmehr können die Kupplungseinrichtung und die Gegenkupplungseinrichtung auch mit anderen Maschinenbauteilen verbunden sein oder damit verbunden werden. Allgemein sind die Kupplungseinrichtung und die Gegenkupplungseinrichtung an Maschinenbauteilen angeordnet, beispielsweise von Werkzeugmaschinen oder Umformmaschinen (z.B. Pressen).

Darüber hinaus umfasst auch das erfindungsgemäße Kupplungssystem eine Verriegelungseinrichtung, um die Kupplungseinrichtung in einem Verriegelungszustand mit der Gegenkupplungseinrichtung zu verriegeln. In einem alternativ möglichen Entriegelungszustand entriegelt die Verriegelungseinrichtung dagegen die Kupplungseinrichtung von der Gegenkupplungseinrichtung, um eine Trennung der Kupplungseinrichtung von der Gegenkupplungseinrichtung zu ermöglichen.

Die Verriegelungseinrichtung kann ohne einen äußeren Antrieb allein aufgrund der Bewegung der Kupplungseinrichtung und der Gegenkupplungseinrichtung entriegelt und verriegelt werden. Dadurch unterscheidet sich das erfindungsgemäße Kupplungssystem von dem eingangs beschriebenen bekannten Kupplungssystem gemäß WO 2009/135552 A1, bei dem zum Verriegeln bzw. Entriegeln der Verriegelungseinrichtung eine Schwenkbewegung des Betätigungshebels erforderlich ist. Bei dem erfindungsgemäßen Kupplungssystem erfolgen die Entriegelung und Verriegelung dagegen ausschließlich aufgrund der Relativbewegung von Kupplungseinrichtung und Gegenkupplungseinrichtung, was eine äußerst einfache Handhabung ermöglicht.

Zum Verriegeln der Verriegelungseinrichtung werden die Kupplungseinrichtung und die Gegenkupplungseinrichtung einfach mechanisch zusammengeführt, was dann beim Zusammentreffen der Kupplungseinrichtung und der Gegenkupplungseinrichtung automatisch zu einer Verriegelung führt.

Das Entriegeln der Verriegelungseinrichtung erfolgt dagegen dadurch, dass das zusammengekuppelte Kupplungssystem auf einem Untergrund aufgesetzt wird, wobei der Berührungskontakt zwischen dem Kupplungssystem und dem Untergrund dann zu einer Entriegelung führt.

Weiterhin ist zu erwähnen, dass zum Zusammenkuppeln und zum Entkuppeln der Kupplungseinrichtung und der Gegenkupplungseinrichtung vorzugsweise nur eine einzige Linearbewegung erforderlich ist, was eine einfache Kinematik ermöglicht. Insbesondere erfordert das Zusammenkuppeln bzw. Entkuppeln des erfindungsgemäßen Kupplungssystems keine Schwenkbewegung oder eine zusätzlich Linearbewegung in einer anderen Richtung.

Beim Zusammenkuppeln des Kupplungssystems wird die Kupplungseinrichtung also vorzugsweise in einer Linearbewegung mit der Gegenkupplungseinrichtung zusammengeführt, wobei diese Linearbewegung vorzugsweise in vertikaler Richtung erfolgt. Dies bietet den Vorteil, dass die Gegenkupplungseinrichtung im entkuppelten Zustand einfach auf einem Untergrund stehen kann, wobei keine separaten Halterungen erforderlich sind, um die Gegenkupplungseinrichtung zu fixieren. Die Kupplungseinrichtung kann dann zum Zusammenkuppeln einfach auf die auf dem Untergrund stehende Gegenkupplungseinrichtung aufgesetzt werden.

Ferner ist zu erwähnen, dass die Verriegelungseinrichtung im Verriegelungszustand vorzugsweise sowohl eine kraftschlüssige Verbindung als auch eine formschlüssige Verbindung zwischen der Kupplungseinrichtung und der Gegenkupplungseinrichtung herstellt. Die formschlüssige Verbindung kann beispielsweise durch Verriegelungskugeln hergestellt werden, die von einem Spannschieber in eine entsprechende Aufnahme gedrückt werden, wie es beispielsweise aus WO 2009/135552 A1 bekannt ist. Die kraftschlüssige Verbindung wird hierbei vorzugsweise dadurch bewirkt, dass der auf die Verriegelungskugel wirkende Spannschieber federbelastet ist und die Verriegelungskugel mittels einer Auflaufschräge an dem Spannschieber in die entsprechende Aufnahme drückt.

In einem bevorzugten Ausführungsbeispiel der Erfindung bewirkt die Verriegelungseinrichtung nicht nur eine Verriegelung bzw. Entriegelung des Kupplungssystems, sondern auch eine Zentrierung und/oder Ausrichtung der Kupplungseinrichtung relativ zu der Gegenkupplungseinrichtung. Beispielsweise können Kupplungseinrichtung und/oder Gegenkupplungseinrichtung hierzu Auflaufschrägen aufweisen, die beim Zusammenkuppeln aufeinander gleiten und dadurch eine Zentrierung und Ausrichtung der Kupplungseinrichtung und der Gegenkupplungseinrichtung relativ zueinander bewirken.

Die Entriegelung bzw. Verriegelung des Kupplungssystems erfolgt vorzugsweise durch zwei separate Betätigungselemente, wobei ein erstes Betätigungselement die Verriegelungseinrichtung bei einer Betätigung aus dem Entriegelungszustand in den Verriegelungszustand bringt, während ein zweites Betätigungselement die Verriegelungseinrichtung bei einer Betätigung aus dem Verriegelungszustand in den Entriegelungszustand bringt. Für Entriegelung und Verriegelung ist also vorzugsweise jeweils ein Betätigungselement vorgesehen.

In dem bevorzugten Ausführungsbeispiel der Erfindung weist die Verriegelungseinrichtung mindestens eine Feder auf, um die Verriegelungseinrichtung federgetrieben von dem Entriegelungszustand in den Verriegelungszustand zu bringen, wobei die Feder wahlweise in einem Spannungszustand oder in einem Entspannungszustand ist. Das zur Entriegelung dienende zweite Betätigungselement wirkt hierbei vorzugsweise auf diese Feder und bringt diese bei einem Entriegelungsvorgang in den Spannungszustand, wobei die Feder dann nicht mehr auf das Verriegelungselement (z.B. Verriegelungskugeln) wirkt.

In diesem bevorzugten Ausführungsbeispiel weist die Verriegelungseinrichtung vorzugsweise eine Halteeinrichtung auf, welche die zum Verriegeln dienende Feder ohne eine Betätigung durch das zum Verriegeln dienende erste Betätigungselement in dem Spannungszustand hält. Die Halteeinrichtung (z.B. Sperrklinke) verhindert also, dass sich die Feder entspannt und dabei auf das jeweilige Verriegelungselement (z.B. Verriegelungskugeln) wirkt. Das zum Verriegeln dienende erste Betätigungselement löst bei einer Betätigung diese Halteeinrichtung, so dass sich die Feder dann entspannt und dabei die Verriegelungseinrichtung in den Verriegelungszustand bringt, indem die Feder beispielsweise einen Spannschieber verschiebt, der dann seinerseits auf Verriegelungskugeln wirkt, was an sich aus dem Stand der Technik bekannt ist.

In dem bevorzugten Ausführungsbeispiel der Erfindung weist die Halteeinrichtung eine federbelastete Sperrklinke auf, um die Feder in dem Spannungszustand zu halten. Das zum Verriegeln dienende erste Betätigungselement löst dann bei einer Betätigung die Sperrklinke und ermöglicht dadurch eine Entspannung der Feder, die dann beispielsweise einen axial verschieblichen Spannschieber verschiebt, der seinerseits auf ein entsprechendes Verriegelungselement (z.B. Verriegelungskugeln) wirkt.

Darüber hinaus weist das erfindungsgemäße Kupplungssystem vorzugsweise eine Spannvorrichtung auf, um die Feder durch eine Betätigung des zum Entriegeln dienenden Betätigungselementes zu spannen. Bei einer Betätigung des zweiten Betätigungselements wirkt dieses also auf die Spanneinrichtung, die dann ihrerseits die Feder spannt. Im Verriegelungszustand ist die Feder also vorzugsweise teilweise entspannt, während die Feder im Entriegelungszustand mindestens teilweise gespannt ist.

Die Spannvorrichtung weist vorzugsweise einen federbelasteten Mitnehmerhebel auf, wobei der federbelastete Mitnehmerhebel in einer entspannten Stellung ein Spannen der Feder ermöglicht, während der federbelastete Mitnehmerhebel in einer gespannten Stellung kein Spannen der Feder ermöglicht.

Es wurde bereits vorstehend kurz erwähnt, dass das erfindungsgemäße Kupplungssystem vorzugsweise durch eine einzige Linearbewegung zusammengekuppelt bzw. entkuppelt werden kann. Das erfindungsgemäße Kupplungssystem weist also vorzugsweise eine bestimmte Verbindungsrichtung auf, wobei die Kupplungseinrichtung und die Gegenkupplungseinrichtung zum Entkuppeln und Zusammenkuppeln entlang der Verbindungsrichtung relativ zueinander bewegt werden. Das zum Verriegeln dienende erste Betätigungselement kann beispielsweise ein erster Betätigungsstift sein, der entlang der Verbindungsrichtung in der Kupplungseinrichtung verschiebbar ist und zumindest in dem Entriegelungszustand aus der Kupplungseinrichtung herausragt. Das zum Entriegeln dienende zweite Betätigungselement kann dagegen ein zweiter Betätigungsstift sein, der entlang der Verbindungsrichtung in der Kupplungseinrichtung verschiebbar ist und zumindest im Verriegelungszustand aus der Kupplungseinrichtung herausragt. Im Verriegelungszustand ragt dagegen vorzugsweise nur der zum Entriegeln dienende zweite Betätigungsstift aus dem Kupplungssystem heraus.

Es wurde bereits vorstehend kurz erwähnt, dass die eigentliche Verriegelung von Kupplungseinrichtung und Gegenkupplungseinrichtung beispielsweise durch eine Verriegelungskugel erfolgen kann, die im Verriegelungszustand in eine entsprechende Aufnahme eingreift und dadurch eine Verriegelung bewirkt. Beispielsweise kann die Verriegelungskugel in der Kupplungseinrichtung beweglich geführt sein, während sich die entsprechende Aufnahme in der Gegenkupplungseinrichtung befindet. Die Betätigung dieser Verriegelungseinrichtung kann beispielsweise durch einen verschiebbaren Spannschieber erfolgen, was an sich aus dem Stand der Technik bekannt ist. Im Verriegelungszustand drückt der Spannschieber die Verriegelungskugel dann in die entsprechende Aufnahme und bewirkt dadurch eine Verriegelung von Kupplungseinrichtung und Gegenkupplungseinrichtung. Im Entriegelungszustand gibt der Spannschieber dagegen die Verriegelungskugel frei und ermöglicht dadurch eine Trennung von Kupplungseinrichtung und Gegenkupplungseinrichtung.

Vor einem Kupplungsvorgang ragt der zum Verriegeln dienende erste Betätigungsstift vorzugsweise aus der Kupplungseinrichtung heraus. Beim Zusammenkuppeln drückt die Gegenkupplungseinrichtung dann den zum Verriegeln dienenden ersten Betätigungsstift in die Kupplungseinrichtung hinein und bewirkt dadurch eine Verriegelung.

Im zusammengekuppelten Zustand ragt dann der zum Entriegeln dienende Betätigungsstift aus der Kupplungseinrichtung heraus, wobei dieser Kupplungsstift über das ganze Kupplungssystem nach unten hinausragt. Beim Aufsetzen des zusammengekuppelten Kupplungssystems auf einen Untergrund drückt der Untergrund dann den zum Entriegeln dienenden zweiten Betätigungsstift in die Kupplungseinrichtung hinein und bewirkt dadurch eine Entriegelung.

Das erfindungsgemäße Kupplungssystem zeichnet sich also vorzugsweise durch eine Tipp-Betätigung sowohl beim Verriegeln als auch beim Entriegeln aus.

Ferner ist zu erwähnen, dass die Erfindung nicht beschränkt ist auf das vorstehend beschriebene Kupplungssystem. Vielmehr umfasst die Erfindung auch eine komplette Maschine (z.B. Presse) mit einem solchen Kupplungssystem wie in Anspruch 14 beansprucht wird.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figuren 1A-1D: verschiedene Schnittansichten eines Ausführungsbeispiels des dungsgemäßen Kupplungssystems im entkuppelten Zustand,
- Figuren 2A-2D: entsprechende Schnittansichten des Kupplungssystems im zusammengekuppelten und verriegelten Zustand auf einem Untergrund,
- Figuren 3A-3D: verschiedene Schnittansichten eines Ausführungsbeispiels des erfindungsgemäßen Kupplungssystems im zusammengekuppelten, verriegelten und abgehobenen Zustand,
- Figuren 4A-4D: verschiedene Schnittansichten eines Ausführungsbeispiels des erfindungsgemäßen Kupplungssystems im abgesenkten und entriegelten Zustand, sowie
- Figur 5: eine Perspektivansicht eines Ausführungsbeispiels des erfindungsgemäßen Kupplungssystems im zusammengekuppelten Zustand.

Die Zeichnungen zeigen ein Ausführungsbeispiel des erfindungsgemässen Kupplungssystems mit einer Kupplungseinrichtung 1 und einer Gegenkupplungseinrichtung 2, die zusammengekuppelt werden können.

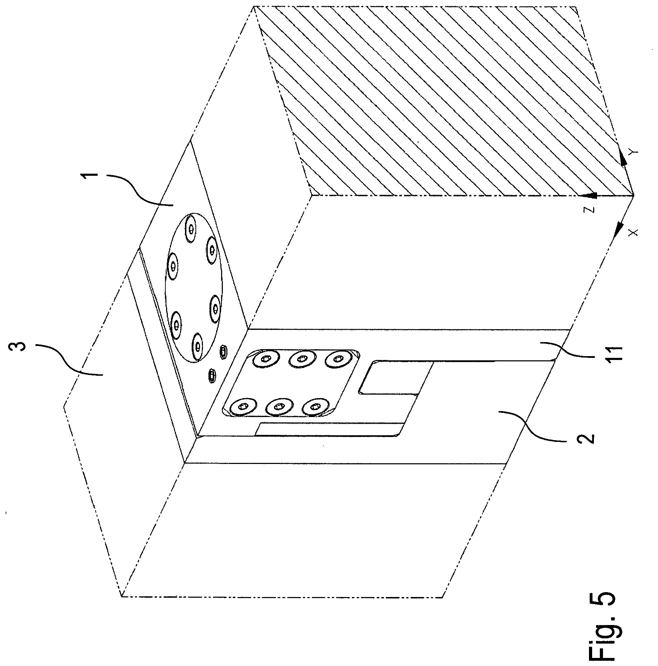

Das erfindungsgemäße Kupplungssystem kann beispielsweise anstelle des Kupplungssystems eingesetzt werden, das aus WO 2009/135552 A2 bekannt ist, um eine Positionierungseinrichtung (nicht dargestellt) lösbar mit einer Greiferschiene 3 (vgl. Figur 5) zusammen zu kuppeln. Die Kupplungseinrichtung 1 ist dann mit der Positionierungseinrichtung verbunden, während die Gegenkupplungseinrichtung 2 mit der Greiferschiene 3 verbunden ist. Die Erfindung ist jedoch nicht auf diesen Einsatzzweck beschränkt, sondern auch zu anderen Zwecken einsetzbar.

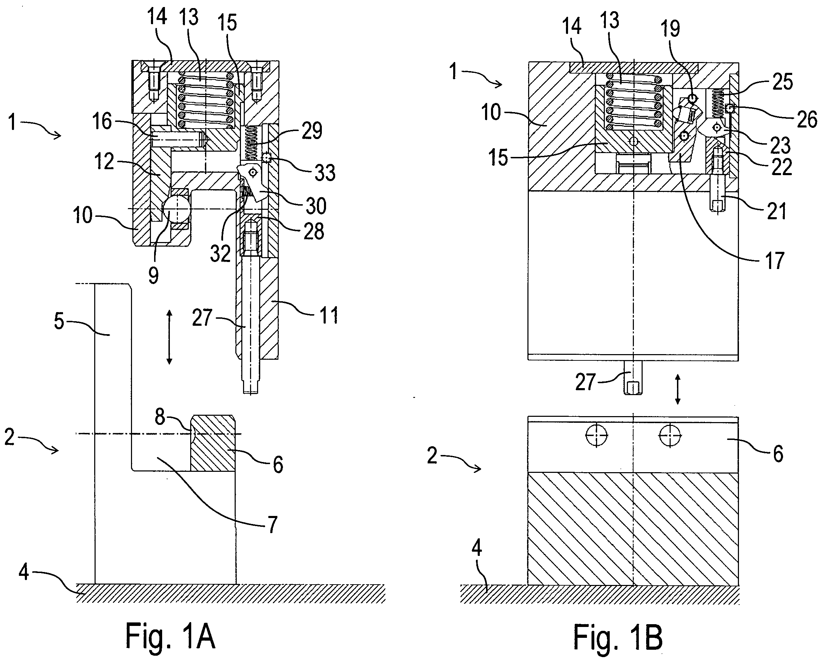

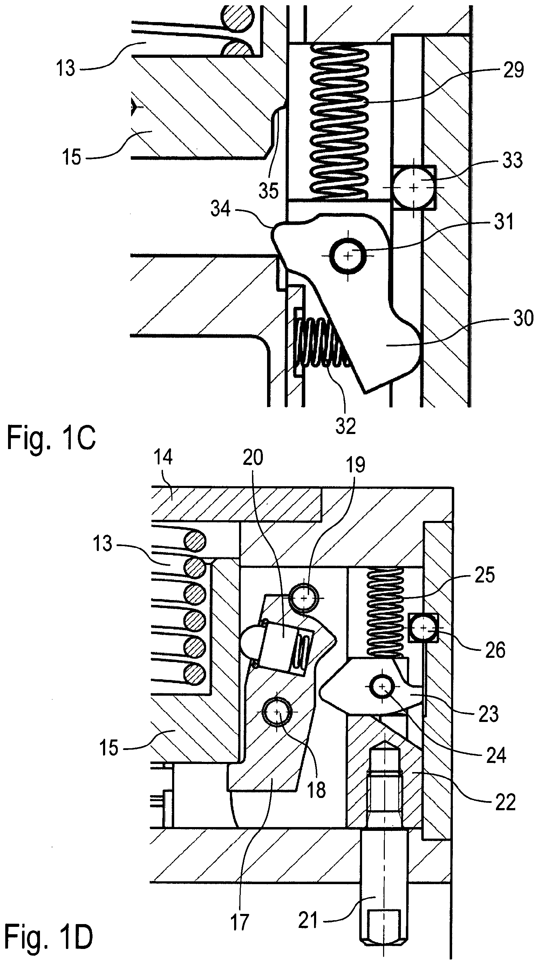

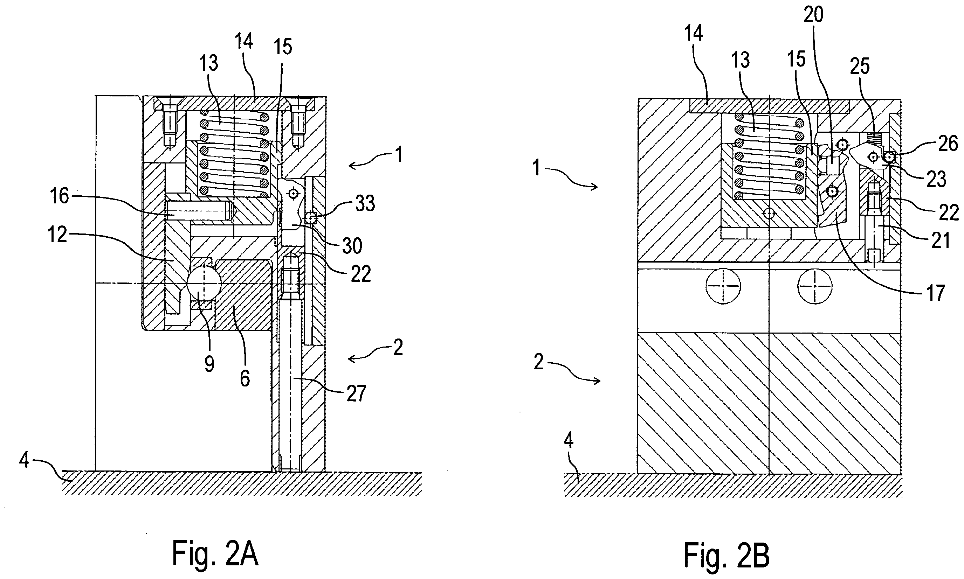

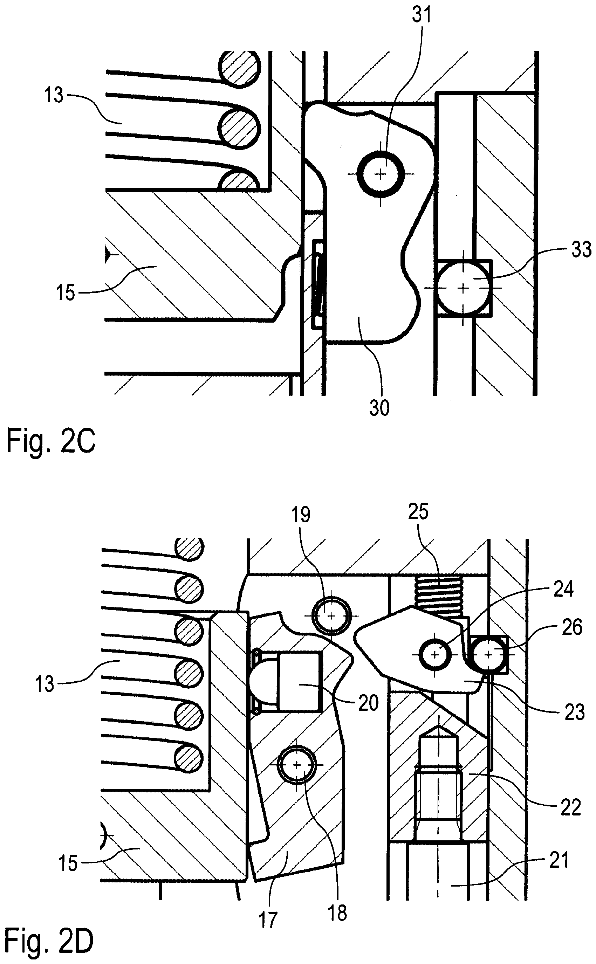

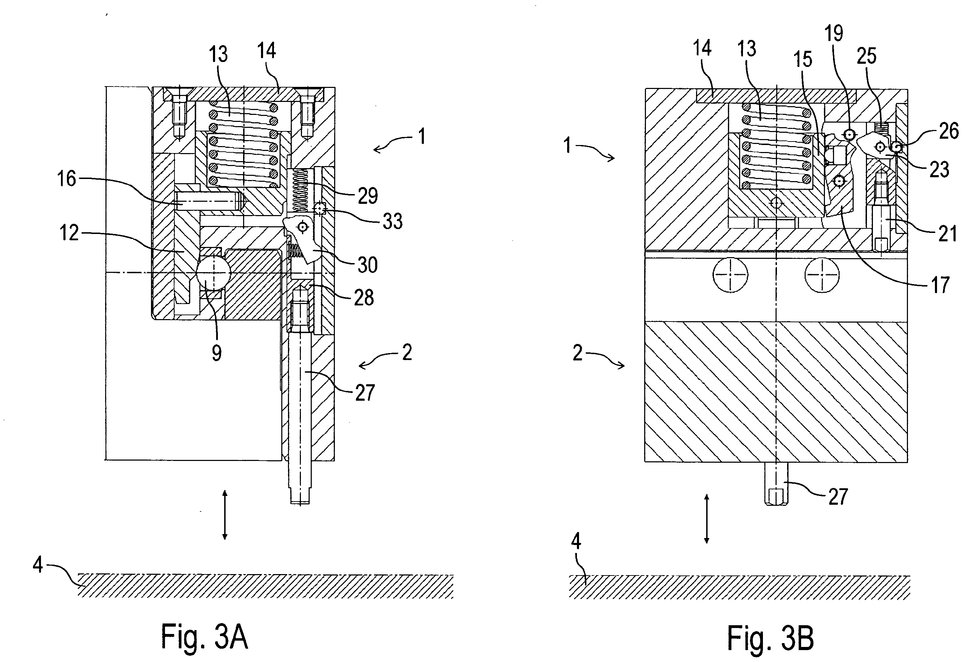

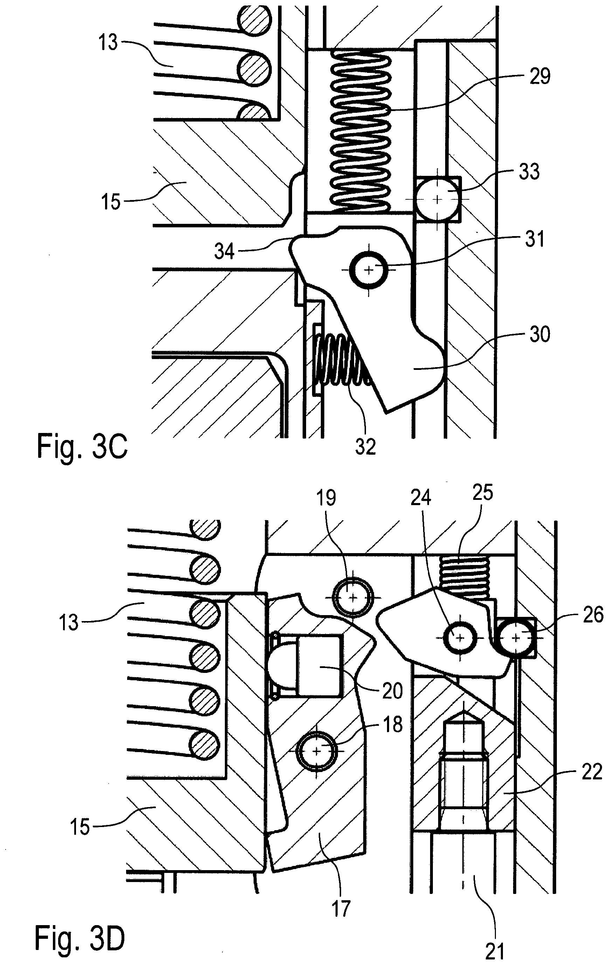

Die Figuren 1A-1D zeigen einen entkoppelten Zustand des Kupplungssystems, in dem die Kupplungseinrichtung 1 von der Gegenkupplungseinrichtung 2 getrennt und entkoppelt ist. Die Gegenkupplungseinrichtung 2 ruht dann auf einem Untergrund 4, während die Kupplungseinrichtung 1 nach oben abgehoben ist. Die Gegenkupplungseinrichtung 2 weist an seiner Oberseite zwei rechtwinklig zur Zeichenebene verlaufende Stege 5, 6, die eine ebenfalls rechtwinklig zur Zeichenebene verlaufende Nut 7 einschließen. An der Innenseite des Stegs 6 befindet sich eine Aufnahme 8 für eine Verriegelungskugel 9 in der Kupplungseinrichtung 1. In dem Verriegelungszustand gemäß den Figuren 2A-2D und 3A-3D greift die Verriegelungskugel 9 in der Kupplungseinrichtung 1 in die Aufnahme 8 in der Gegenkupplungseinrichtung 2 ein und verriegelt dadurch die Verbindung zwischen der Kupplungseinrichtung 1 und der Gegenkupplungseinrichtung 2, wie noch detailliert beschrieben wird.

Die Kupplungseinrichtung 1 weist an ihrer Unterseite ebenfalls zwei Stege 10, 11 auf, die rechtwinklig zur Zeichenebene verlaufen und eine Nut einschließen. Beim Zusammenkuppeln der Kupplungseinrichtung 1 und der Gegenkupplungseinrichtung 2 wird der Steg 10 der Kupplungseinrichtung 1 in Pfeilrichtung in die Nut 7 der Gegenkupplungseinrichtung 2 eingeführt. Dabei greift der Steg 6 der Gegenkupplungseinrichtung 2 in die Nut der Kupplungseinrichtung 1 ein. Die Breite der Nut zwischen den beiden Stegen 10, 11 der Kupplungseinrichtung 1 ist deshalb im Wesentlichen gleich der Breite des Stegs 6, während die Breite der Nut 7 im Wesentlichen gleich der Breite des Stegs 10 ist.

Die Verriegelungskugel 9 ist in dem Steg 10 der Kupplungseinrichtung 1 in horizontaler Richtung verschiebbar angeordnet. In einer Entriegelungsstellung gemäß den Figuren 1A-1D ist die Verriegelungskugel 9 nach links in den Steg 10 hineingedrückt und ragt somit nicht nach rechts aus dem Steg 10 heraus, so dass die Verriegelungskugel 9 auch nicht die Aufnahme 8 in dem Steg 6 der Gegenkupplungseinrichtung 2 eingreift. In der Verriegelungsstellung gemäß den Figuren 2A-2D und 3A-3D wird die Verriegelungskugel 9 dagegen von einem vertikal verschiebbaren Spannschieber 12 nach rechts gedrückt, so dass die Verriegelungskugel 9 dann aus dem Steg 10 heraus ragt und in die Aufnahme 8 in dem Steg 6 der Gegenkupplungseinrichtung 2 eingreift und dadurch die Kupplungseinrichtung 1 mit der Gegenkupplungseinrichtung 2 im gekuppelten Zustand verriegelt

In der Kupplungseinrichtung 1 befindet sich eine Spiralfeder 13, die sich mit ihrem oberen Ende an einem Gehäusedeckel 14 abstützt, der auf die Kupplungseinrichtung 1 aufgeschraubt ist. Mit ihrem unteren Ende stützt sich die Spiralfeder 13 an einem Kolbenboden eines vertikal verschiebbaren Kolbens 15 ab, der in der Kupplungseinrichtung 1 vertikal verschiebbar angeordnet ist, wobei der Kolben 15 über einen Verbindungsstift 16 mit dem Spannschieber 12 verbunden ist. Die Spiralfeder 13 drückt also den Spannschieber 12 über den Kolben 15 und den Verbindungsstift 16 nach unten in die Verriegelungsstellung, so dass der Spannschieber 12 federbelastet ist.

In der Entriegelungsstellung gemäß den Figuren 1A-1D wird der Kolben 15 von einer Sperrklinke 17 in einer angehobenen Position gehalten, so dass auch der Spannschieber 12 dann in vertikaler Richtung angehoben ist, wodurch die Verriegelungskugel 9 in dem Steg 10 der Kupplungseinrichtung 1 nach innen ausweichen kann und dann nicht nach außen aus dem Steg 10 herausragt.

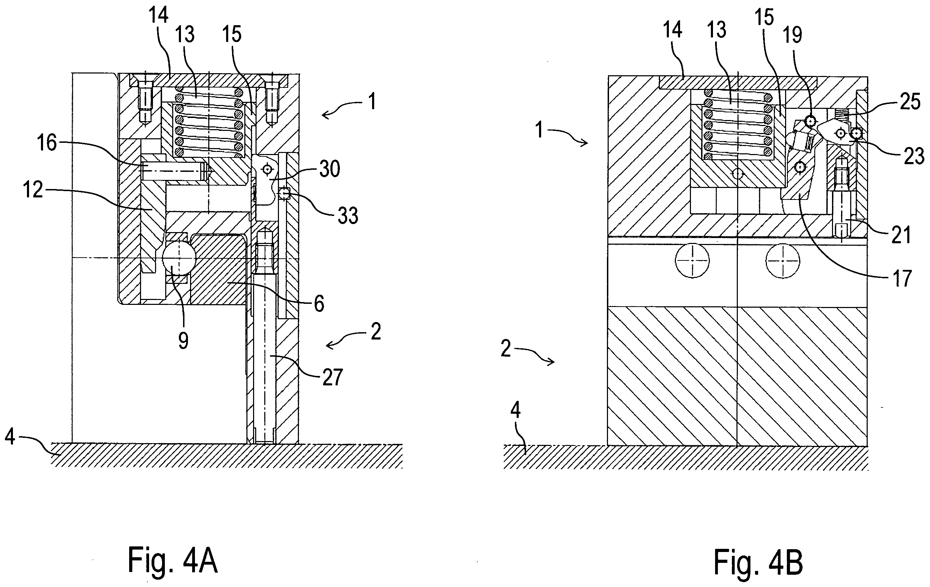

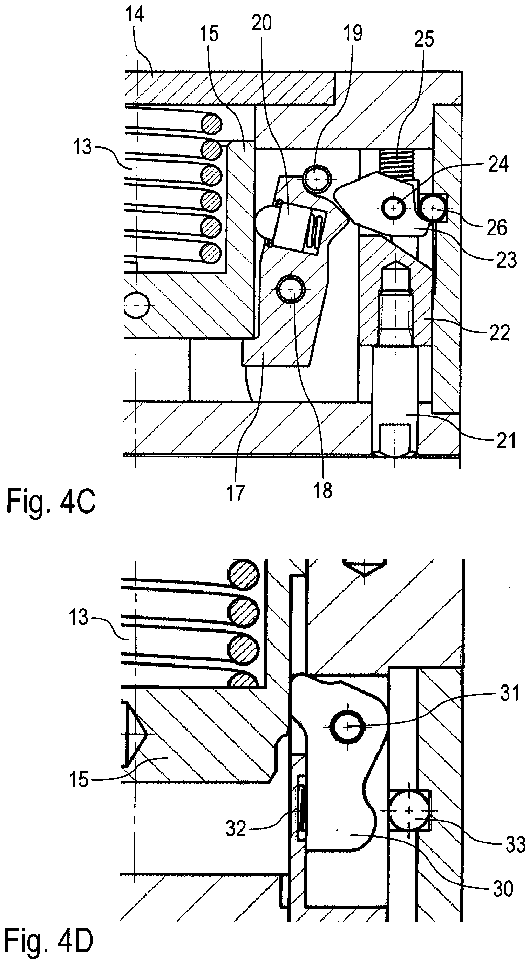

Die Sperrklinke 17 in der Kupplungseinrichtung 1 bildet einen zweiseitigen Hebel und ist um eine Drehachse 18 schwenkbar, wobei die Schwenkbewegung der Sperrklinke 17 in Uhrzeigerrichtung durch einen Anschlag 19 begrenzt wird. Die Sperrklinke 17 kann also im Uhrzeigersinn nur so weit geschwenkt werden, bis der obere Hebelarm der Sperrklinke 17 an dem Anschlag anliegt, wie in den Figuren 1B, 1D sowie 4B, 4D dargestellt ist. Darüber hinaus ist die Sperrklinke 17 ebenfalls federbelastet mittels einer Spiralfeder, die in eine Vertiefung in dem oberen Hebelarm der Sperrklinke 17 eingelassen ist und ein pilzförmiges Gleitelement 20 gegen die äußere Mantelfläche des Kolbens 15 drückt. Die Spiralfeder des Gleitelements 20 spannt die Sperrklinke 17 also im Uhrzeigersinn vor, wodurch der Kolben 15 zusammen mit dem Spannschieber 12 oben in der Entriegelungsstellung gehalten wird, sofern die Sperrklinke 17 nicht gelöst wird, wie noch detailliert beschrieben wird.

Das Lösen der Sperrklinke 17 erfolgt mittels eines Taststifts 21, der in der Kupplungseinrichtung 1 vertikal verschiebbar angeordnet ist und in der Entriegelungsstellung gemäß den Figuren 1A-1D nach unten in die Nut zwischen den beiden Stegen 10, 11 der Kupplungseinrichtung 1 hineinragt. Beim Zusammenkuppeln der Kupplungseinrichtung 1 und der Gegenkupplungseinrichtung 2 drückt der Steg 6 der Gegenkupplungseinrichtung 2 also den Taststift 21 der Kupplungseinrichtung 1 nach oben in die Kupplungseinrichtung 1 hinein.

Der Taststift 21 ist in die Unterseite eines vertikal verschiebbaren Schiebers 22 eingeschraubt, der an seiner Oberseite einen Entsperrungshebel 23 trägt, der um eine Drehachse 24 schwenkbar ist. Der Schieber 22 wird zusammen mit dem Entsperrungshebel 23 und dem Taststift 21 von einer Spiralfeder 25 nach unten vorgespannt.

Darüber hinaus weist die Kupplungseinrichtung noch einen Anschlag 26 für den Entsperrungshebel 23 auf. Bei einer Aufwärtsbewegung des Schiebers 22 mit dem Entsperrungshebel 23 stößt der linke Hebelarm des Entsperrungshebels 23 an den oberen Hebelarm der Sperrklinke 17 und schwenkt die Sperrklinke 17 dadurch entgegen dem Uhrzeigersinn, wodurch die Sperrklinke 17 den Kolben 15 freigibt, so dass der durch die Spiralfeder 13 federbelastete Kolben 15 den Spannschieber 12 nach unten in die Verriegelungsstellung drückt. Dabei stößt der rechte Hebelarm des Entsperrungshebels 23 an den Anschlag 26, wodurch der Entsperrungshebel 23 etwas um Uhrzeigersinn geschwenkt wird.

Darüber hinaus ermöglicht das erfindungsgemäße Kupplungssystem ein Entriegeln und erneutes Spannen der Spiralfeder 13 mittels eines weiteren Taststifts 27, der in dem Steg 11 der Kupplungseinrichtung 1 vertikal verschiebbar angeordnet ist und im entkuppelten Zustand nach unten aus dem Steg 11 der Kupplungseinrichtung 1 herausragt. Der Taststift 27 ist in die Unterseite eines vertikal verschiebbaren Schiebers 28 eingeschraubt, der an seiner Oberseite von einer Spiralfeder 29 nach unten gedrückt wird.

Der Schieber 28 trägt einen Spannhebel 30, der um eine Drehachse 31 schwenkbar ist und von einer Spiralfeder 32 entgegen dem Uhrzeigersinn vorgespannt wird. Darüber hinaus ist in die Gehäuseinnenwand der Kupplungseinrichtung 1 ein Anschlag 33 angeordnet.

Bei einer Aufwärtsbewegung des Schiebers 28 greift eine Nase 34 des Spannhebels 30 in einen Absatz 35 in dem Kolben 15 ein. Bei einer weiteren Aufwärtsbewegung des Schiebers 28 schiebt der Spannhebel 30 dann den Kolben 15 zusammen mit dem Spannschieber 12 nach oben, bis schließlich die Sperrklinke 17 den Kolben 15 wieder in der angehobenen Position gemäß den Figuren 1A-1D hält.

Bei einer noch weiter gehenden Aufwärtsbewegung des Schiebers 28 stößt der Spannhebel 30 dann mit seinem rechten Hebelarm gegen den Anschlag 33, wodurch der Spannhebel 30 im Uhrzeigersinn geschwenkt wird, bis sich die Nase 34 des Spannhebels 30 an die äußere Mantelfläche des Kolbens 15 anlegt.

Im Folgenden werden nun die verschiedenen Zustände des Kupplungssystems und deren Zustandsübergänge beschrieben.

Die Figuren 1A-1D zeigen einen entkuppelten, gespannten Zustand des Kupplungssystems. In diesem Zustand ist die Kupplungseinrichtung 1 von der Gegenkupplungseinrichtung 2 getrennt. Der Kolben 15 wird in diesem Zustand von der Sperrklinke 17 in der angehobenen Position gehalten, so dass die Spiralfeder 13 gespannt ist. Der Spannschieber 12 ist also ebenfalls angehoben, so dass die Verriegelungskugel 9 seitlich nach innen in den Steg 10 der Kupplungseinrichtung 1 ausweichen kann, so dass die Verriegelungskugel 9 ein Zusammenkuppeln der Kupplungseinrichtung 1 und der Gegenkupplungseinrichtung 2 ermöglicht. Schließlich werden die beiden Taststifte 21, 27 von den zugehörigen Spiralfedern 25 bzw. 29 nach unten gedrückt und ragen deshalb nach unten aus der Kupplungseinrichtung 1 heraus.

Zum Zusammenkuppeln werden die Kupplungseinrichtung 1 und die Gegenkupplungseinrichtung 2 in vertikaler Richtung zusammengeführt, bis die Kupplungseinrichtung 1 und die Gegenkupplungseinrichtung 2 den in den Figuren 2A-2D gezeigten Verriegelungszustand einnehmen.
Bei diesem Zusammenkuppeln der Kupplungseinrichtung 1 und der Gegenkupplungseinrichtung 2 wird der Taststift 27 in die Kupplungseinrichtung 1 hineingeschoben. Bei der resultierenden Aufwärtsbewegung des mit dem Taststift 27 verbundenen Schiebers 28 schiebt der Spannhebel 30 den Kolben 15 zusammen mit dem Spannschieber 12 nach oben, so dass die Sperrklinke 17 zum Entsperren entlastet ist. Bei der weiteren Aufwärtsbewegung stößt der Spannhebel 30 mit seinem rechten Hebelarm gegen den Anschlag 33, wodurch der Spannhebel 30 im Uhrzeigersinn geschwenkt wird und deshalb die Abwärtsbewegung des Kolbens 15 nicht blockiert.

Bei dem Zusammenkuppeln drückt auch der Steg 6 der Gegenkupplungseinrichtung 2 den anderen Taststift 21 der Kupplungseinrichtung 1 nach oben in die Kupplungseinrichtung 1 hinein. Der Taststift 21 entsperrt dabei über den Entsperrungshebel 23 die zu diesem Zeitpunkt entlastete Sperrklinke 17, die darauf hin den Kolben 15 frei gibt. Der Kolben 15 schiebt dann unter der Federvorspannung durch die Spiralfeder 13 den Spannschieber 12 nach unten. Bei seiner Abwärtsbewegung schiebt der Spannschieber 12 die Verriegelungskugel 9 seitlich nach rechts, so dass die Verriegelungskugel 9 aus dem Steg 10 der Kupplungseinrichtung 1 herausragt und dann in die Aufnahme 8 in dem Steg 6 der Gegenkupplungseinrichtung 2 eingreift, wodurch eine Verriegelung bewirkt wird.

In den Figuren 2A-2D ist das Kupplungssystem also verriegelt, so dass die Kupplungseinrichtung 1 angehoben werden kann, wobei die Kupplungseinrichtung 1 die fest angekuppelte Gegenkupplungseinrichtung 2 mitnimmt. Beim Abheben der Gegenkupplungseinrichtung 2 von dem Untergrund 4 wird der Taststift 27 dann von der Spiralfeder 29 wieder nach unten gedrückt und ragt dann wieder nach unten aus dem Steg 11 der Kupplungseinrichtung 1 heraus, wie in den Figuren 3A-3D dargestellt ist.

Beim erneuten Aufsetzen des zusammengekuppelten Kupplungssystems auf den Untergrund 4 wird der Taststift 27 dann wieder nach oben in die Kupplungseinrichtung 1 hineingedrückt. Dabei schiebt der Spannhebel 30 den Kolben 15 nach oben, bis der Kolben 15 dann wieder von der Sperrklinke 17 in der angehobenen Position gehalten wird, wie in den Figuren 4B und 4C dargestellt ist. Bei diesem Hochschieben des Kolbens 15 wird auch der mit dem Kolben 15 verbundene Spannschieber 12 nach oben bewegt, wodurch die Verriegelungskugel 9 seitlich ausweichen kann, so dass die Verriegelung des Kupplungssystems gelöst wird. Beim anschließenden Trennen des Kupplungssystems drückt die Spiralfeder 25 dann auch den anderen Taststift 21 wieder aus der Kupplungseinrichtung heraus, so dass wieder der Zustand gemäß den Figuren 1A-1D hergestellt wird.

Die Erfindung ist nicht auf das vorstehend beschriebene bevorzugte Ausführungsbeispiel beschränkt. Vielmehr ist eine Vielzahl von Varianten und Abwandlungen möglich, die in den Schutzbereich der Ansprüche fallen.

### Bezugszeichenliste

- 1: Kupplungseinrichtung
- 2: Gegenkupplungseinrichtung
- 3: Greiferschiene
- 4: Untergrund
- 5: Steg der Gegenkupplungseinrichtung
- 6: Steg der Gegenkupplungseinrichtung
- 7: Nut der Gegenkupplungseinrichtung
- 8: Aufnahme für Verriegelungskugel
- 9: Verriegelungskugel in der Kupplungseinrichtung
- 10: Steg der Kupplungseinrichtung
- 11: Steg der Kupplungseinrichtung
- 12: Spannschieber
- 13: Spiralfeder
- 14: Gehäusedeckel
- 15: Kolben
- 16: Verbindungsstift
- 17: Sperrklinke
- 18: Drehachse der Sperrklinke
- 19: Anschlag für die Sperrklinke
- 20: Gleitelement
- 21: Taststift zum Verriegeln und Spannen
- 22: Schieber
- 23: Entsperrungshebel
- 24: Drehachse des Entsperrungshebels
- 25: Spiralfeder
- 26: Anschlag für den Entsperrungshebel
- 27: Taststift zum Entriegeln und Spannen
- 28: Schieber
- 29: Spiralfeder
- 30: Spannhebel
- 31: Drehachse des Spannhebels
- 32: Spiralfeder
- 33: Anschlag für den Spannhebel
- 34: Nase des Spannhebels
- 35: Absatz in dem Kolben

## Patentansprüche

1. Kupplungssystem für eine Maschine, insbesondere für eine Presse, insbesondere zur mechanischen Kupplung eines Positionierungsmechanismus' an eine Greiferschiene (3), mit
a) einer Kupplungseinrichtung (1) zur Anbringung an einem Maschinenbauteil, insbesondere an einem Positionierungsmechanismus,
b) einer Gegenkupplungseinrichtung (2) zur Anbringung an einem Maschinenbauteil, insbesondere an einer Greiferschiene (3), wobei die Kupplungseinrichtung (1) und die Gegenkupplungseinrichtung (2) wahlweise zusammengekuppelt oder entkuppelt werden können, und
c) einer Verriegelungseinrichtung (8-35), die in einem Verriegelungszustand die Kupplungseinrichtung (1) mit der Gegenkupplungseinrichtung (2) verriegelt und in einem Entriegelungszustand die Kupplungseinrichtung (1) und die Gegenkupplungseinrichtung (2) entriegelt,
d) wobei die Verriegelungseinrichtung (8-35) ohne einen äußeren Antrieb allein aufgrund der Relativbewegung der Kupplungseinrichtung (1) und der Gegenkupplungseinrichtung (2) entriegelt und verriegelt,
**dadurch gekennzeichnet,**
e) dass die Verriegelungseinrichtung (8-35) beim Zusammenkuppeln der Kupplungseinrichtung (1) und der Gegenkupplungseinrichtung (2) automatisch verriegelt, und
f) dass die Verriegelungseinrichtung (8-35) automatisch entriegelt, wenn das zusammengekuppelte Kupplungssystem auf einem Untergrund (4) aufgesetzt wird.

2. Kupplungssystem nach Anspruch 1,
**dadurch gekennzeichnet,**
a) **dass** zum Zusammenkuppeln und zum Entkuppeln der Kupplungseinrichtung (1) und der Gegenkupplungseinrichtung (2) nur eine einzige Linearbewegung erforderlich ist, insbesondere ohne eine Schwenkbewegung oder eine zusätzliche Linearbewegung in einer anderen Richtung, und/oder
b) **dass** die Gegenkupplungseinrichtung (2) beim Zusammenkuppeln ohne eine Halterung auf einem Untergrund (4) stehen kann.

3. Kupplungssystem nach einem der vorhergehenden Ansprüche, **dadurch gekennzeichnet, dass** die Verriegelungseinrichtung (8-35) im Verriegelungszustand eine kraftschlüssige Verbindung und eine formschlüssige Verbindung zwischen der Kupplungseinrichtung (1) und der Gegenkupplungseinrichtung (2) herstellt.

4. Kupplungssystem nach einem der vorhergehenden Ansprüche, **dadurch gekennzeichnet,**
a) **dass** die Verriegelungseinrichtung (8-35) im Verriegelungszustand eine Zentrierung und/oder eine Ausrichtung der Kupplungseinrichtung (1) und der Gegenkupplungseinrichtung (2) relativ zueinander bewirkt, und/oder
b) **dass** die Kupplungseinrichtung (1) und/oder die Gegenkupplungseinrichtung (2) Auflaufschrägen aufweist, die beim Zusammenkuppeln eine Zentrierung und Ausrichtung der Kupplungseinrichtung (1) und der Gegenkupplungseinrichtung (2) relativ zueinander bewirkt.

5. Kupplungssystem nach einem der vorhergehenden Ansprüche, **gekennzeichnet durch**
a) ein erstes Betätigungselement (21), welches die Verriegelungseinrichtung (8-35) bei einer Betätigung aus dem Entriegelungszustand in den Verriegelungszustand bringt, und
b) ein zweites Betätigungselement (27), welches die Verriegelungseinrichtung (8-35) bei einer Betätigung aus dem Verriegelungszustand in den Entriegelungszustand bringt.

6. Kupplungssystem nach Anspruch 5,
**dadurch gekennzeichnet,**
a) **dass** die Verriegelungseinrichtung (8-35) eine Feder (13) aufweist, um die Verriegelungseinrichtung (8-35) federgetrieben von dem Entriegelungszustand in den Verriegelungszustand zu bringen, wobei die Feder (13) wahlweise in einem Spannungszustand oder in einem Entspannungszustand ist,
b) **dass** das zweite Betätigungselement (27) bei einer Betätigung die Verriegelungseinrichtung (8-35) in den Entriegelungszustand bringt und dabei die Feder (13) in den Spannungszustand bringt.

7. Kupplungssystem nach einem der vorhergehenden Ansprüche, **dadurch gekennzeichnet,**
a) **dass** die Verriegelungseinrichtung (8-35) eine Halteeinrichtung (17-26) aufweist, welche die Feder (13) ohne eine Betätigung durch das erste Betätigungselement (21) in dem Spannungszustand hält, und
b) **dass** das erste Betätigungselement (21) die Halteeinrichtung (17-26) bei einer Betätigung löst, so dass sich die Feder (13) entspannt und dabei die Verriegelungseinrichtung (8-35) in den Verriegelungszustand bringt.

8. Kupplungssystem nach Anspruch 7,
**dadurch gekennzeichnet,**
a) **dass** die Halteeinrichtung (17-26) eine federbelastete Sperrklinke (17) aufweist, um die Feder (13) in dem Spannungszustand zu halten, und
b) **dass** das erste Betätigungselement (21) bei einer Betätigung die Sperrklinke (17) löst und dadurch eine Entspannung der Feder (13) ermöglicht.

9. Kupplungssystem nach einem der vorhergehenden Ansprüche, **dadurch gekennzeichnet,**
a) **dass** die Verriegelungseinrichtung (8-35) eine Spannvorrichtung (27-35) aufweist, um die Feder (13) durch eine Betätigung des zweiten Betätigungselements (27) zu spannen,
b) **dass** das zweite Betätigungselement (27) bei einer Betätigung auf die Spannvorrichtung (27-35) wirkt, die dann die Feder (13) spannt.

10. Kupplungssystem nach Anspruch 9,
**dadurch gekennzeichnet,**
a) **dass** die Spannvorrichtung (27-35) einen federbelasteten Mitnehmerhebel (30) aufweist,
b) **dass** der federbelastete Mitnehmerhebel (30) in einer entspannten Stellung ein Spannen der Feder (13) ermöglicht, und
c) **dass** der federbelastete Mitnehmerhebel (30) in einer gespannten Stellung kein Spannen der Feder (13) ermöglicht.

11. Kupplungssystem nach einem der vorhergehenden Ansprüche, **dadurch gekennzeichnet,**
a) **dass** das Kupplungssystem eine bestimmte Verbindungsrichtung (↕) aufweist, wobei die Kupplungseinrichtung (1) und die Gegenkupplungseinrichtung (2) zum Kuppeln und Entkuppeln entlang der Verbindungsrichtung (↕) relativ zueinander bewegt werden,
b) **dass** das zum Verriegeln dienende erste Betätigungselement (21) ein erster Betätigungsstift ist, der entlang der Verbindungsrichtung (↕) verschiebbar ist und zumindest in dem Entriegelungszustand aus der Kupplungseinrichtung (1) herausragt,
c) **dass** das zum Entriegeln dienende zweite Betätigungselement (27) ein zweiter Betätigungsstift ist, der entlang der Verbindungsrichtung (↕) verschiebbar ist und zumindest in der Verriegelungsstellung aus der Kupplungseinrichtung (1) herausragt.

12. Kupplungssystem nach einem der vorhergehenden Ansprüche, **dadurch gekennzeichnet,**
a) **dass** die Verriegelungseinrichtung (8-35) mindestens eine Verriegelungskugel (9) aufweist, die im Verriegelungszustand in eine Aufnahme (8) eingreift,
b) **dass** die Verriegelungseinrichtung (8-35) einen verschiebbaren Spannschieber (12) aufweist,
b1) wobei der Spannschieber (12) im Verriegelungszustand die Verriegelungskugel (9) in die Aufnahme (8) drückt,
b2) wohingegen der Spannschieber (12) im Entriegelungszustand die Verriegelungskugel (9) nicht in die Aufnahme (8) drückt.

13. Kupplungssystem nach einem der Ansprüche 11 bis 12, **dadurch gekennzeichnet,**
a) **dass** der erste Betätigungsstift (21) aus der Kupplungseinrichtung (1) oder der Gegenkupplungseinrichtung (2) heraus ragt, so dass der erste Betätigungsstift (21) beim Zusammenkuppeln der Kupplungseinrichtung (1) und der Gegenkupplungseinrichtung (2) hinein geschoben wird, und/oder
b) **dass** der zweite Betätigungsstift (27) aus der Kupplungseinrichtung (1) oder der Gegenkupplungseinrichtung (2) heraus ragt, so dass der zweite Betätigungsstift (27) unabhängig vom Kupplungszustand hinein geschoben wird, wenn der auf einem Untergrund (4) aufsetzt.

14. Maschine, insbesondere Presse, mit einem Kupplungssystem nach einem der vorhergehenden Ansprüche.

## Claims

1. Coupling system for a machine, in particular for a press, in particular for mechanically coupling a positioning mechanism to a gripper rail (3), with
a) a coupling device (1) for mounting on a machine component, in particular on a positioning mechanism,
b) a counter-coupling device (2) for attachment to a machine component, in particular to a gripper rail (3), the coupling device (1) and the counter-coupling device (2) being selectively coupled or uncoupled, and
c) a locking device (8-35) which, in a locked state, locks the coupling device (1) with the counter-coupling device (2) and, in an unlocked state, unlocks the coupling device (1) and the counter-coupling device (2),
d) wherein the locking device (8-35) unlocks and locks without an external drive solely due to the relative movement of the coupling device (1) and the counter-coupling device (2),
**characterized in that,**
e) the locking device (8-35) locks automatically when the coupling device (1) and the counter-coupling device (2) are coupled together, and
f) the locking device (8-35) unlocks automatically when the coupled coupling system is placed on a underground (4) .

2. Coupling system according to claim 1,
**characterized in that,**
a) only a single linear movement is required for coupling and uncoupling the coupling device (1) and the counter-coupling device (2), in particular without a pivoting movement or an additional linear movement in another direction, and/or
b) the counter-coupling device (2) can stand on a underground (4) during coupling without a mounting.

3. Coupling system according to one of the preceding demands, **characterized in that** the locking device (8-35) establishes a frictional connection and a positive connection between the coupling device (1) and the counter-coupling device (2) in the locked state.

4. Coupling system in accordance with one of the preceding claims, **characterized in that**
a) the locking device (8-35) in the locked state causes the coupling device (1) and the counter-coupling device (2) to be centred and/or aligned relative to one another, and/or
b) the coupling device (1) and/or the counter-coupling device (2) has ramp angles which, when coupled together, causes the coupling device (1) and the counter-coupling device (2) to be centred and aligned relative to one another.

5. Coupling system according to one of the preceding requirements, **characterized by**
a) a first actuating element (21) which brings the locking device (8-35) from the unlocked state into the locked state when actuated, and
b) a second actuating element (27) which brings the locking device (8-35) from the locked state into the unlocked state when actuated.

6. Coupling system according to claim 5,
**characterized in that,**
a) the locking device (8-35) comprises a spring (13) for bringing the locking device (8-35) spring driven from the unlocking state into the locking state, wherein the spring (13) is optionally in a stress state or in a relaxation state,
b) the second actuating element (27) brings the locking device (8-35) into the unlocking state when actuated, thereby bringing the spring (13) into the tension state.

7. Coupling system in accordance with one of the preceding claims, **characterized in that**
a) the locking device (8-35) has a holding device (17-26) which holds the spring (13) in the stress state without actuation by the first actuating element (21), and
b) the first actuating element (21) releases the holding device (17-26) upon actuation so that the spring (13) relaxes and thereby brings the locking device (8-35) into the locked state.

8. Coupling system according to claim 7,
**characterized in that,**
a) said holding device (17-26) comprises a spring-loaded pawl (17) for holding said spring (13) in the state of tension, and
b) the first actuating element (21) releases the pawl (17) when actuated, thereby allowing the spring (13) to release.

9. Coupling system in accordance with one of the preceding requirements, **characterised in that**
a) the locking device (8-35) comprises a tensioning device (27-35) for tensioning the spring (13) by actuating the second actuating element (27),
b) the second actuating element (27) acts on the clamping device (27-35) when actuated, which then tensions the spring (13).

10. Coupling system according to claim 9,
**characterized in that,**
a) the clamping device (27-35) has a spring-loaded driving lever (30),
b) the spring-loaded driving lever (30) enables the spring (13) to be tensioned in a released position, and
c) the spring-loaded driving lever (30) does not allow the spring (13) to be tensioned in a tensioned position.

11. Coupling system in accordance with one of the preceding requirements, **characterized in that**
a) the coupling system has a specific connection direction (↕), wherein the coupling device (1) and the counter-coupling device (2) for coupling and uncoupling are moved relative to one another along the connection direction (↕),
b) the first actuating element (21) serving for locking is a first actuating pin which is displaceable along the connecting direction (↕) and projects out of the coupling device (1) in the unlocking state,
c) the second actuating element (27) serving for unlocking is a second actuating pin which is displaceable along the connecting direction (↕) and projects out of the coupling device (1) at least in the locking position.

12. Coupling system according to one of the preceding requirements, **characterized in that**
a) the locking device (8-35) has at least one locking ball (9) which engages in a receptacle (8) in the locked state,
b) the locking device (8-35) has a slidable clamping slide (12),
b1) wherein the clamping slide (12) presses the locking ball (9) into the receptacle (8) in the locked state,
b2) whereas in the unlocked state the clamping slide (12) does not press the locking ball (9) into the mounting (8).

13. Coupling system according to any one of claims 11 to 12, **characterized in that,**
a) the first actuating pin (21) projects out of the coupling device (1) or the counter-coupling device (2) so that the first actuating pin (21) is pushed in when coupling the coupling device (1) and the counter-coupling device (2) together, and/or
b) the second actuating pin (27) projects out of the coupling device (1) or the counter-coupling device (2) so that the second actuating pin (27) is pushed in irrespective of the coupling state when it touches down on a underground (4).

14. Machine, in particular press, with a coupling system according to one of the preceding requirements.

## Revendications

1. Système d'accouplement pour une machine, en particulier pour une presse, en particulier pour l'accouplement mécanique d'un mécanisme de positionnement à un rail à griffes (3), avec
a) un dispositif d'accouplement (1) pour le montage sur un composant de machine, en particulier sur un mécanisme de positionnement,
b) un dispositif d'accouplement complémentaire (2) pour le montage sur un composant de machine, en particulier sur un rail à griffes (3), dans lequel le dispositif d'accouplement (1) et le dispositif d'accouplement complémentaire (2) peuvent être accouplés ensemble ou découplés au choix, et
c) un dispositif de verrouillage (8-35) qui verrouille dans un état de verrouillage le dispositif d'accouplement (1) avec le dispositif d'accouplement complémentaire (2) et déverrouille dans un état de déverrouillage le dispositif d'accouplement (1) et le dispositif d'accouplement complémentaire (2),
d) dans lequel le dispositif de verrouillage (8-35) déverrouille et verrouille sans entraînement extérieur seulement en raison du mouvement relatif du dispositif d'accouplement (1) et du dispositif d'accouplement complémentaire (2),
**caractérisé en ce**
e) que le dispositif de verrouillage (8-35) se verrouille automatiquement lors de l'accouplement ensemble du dispositif d'accouplement (1) et du dispositif d'accouplement complémentaire (2), et
f) que le dispositif de verrouillage (8-35) se déverrouille automatiquement lorsque le système d'accouplement accouplé ensemble est placé sur le sol (4).

2. Système d'accouplement selon la revendication 1, **caractérisé en ce**
a) **que** pour l'accouplement ensemble et pour le désaccouplement du dispositif d'accouplement (1) et du dispositif d'accouplement complémentaire (2) un seul mouvement linéaire est nécessaire, en particulier sans mouvement pivotant ou mouvement linéaire supplémentaire dans un autre sens, et/ou
b) **que** le dispositif d'accouplement complémentaire (2) peut tenir debout lors de l'accouplement ensemble sans support sur le sol (4).

3. Système d'accouplement selon l'une quelconque des revendications précédentes,
**caractérisé en ce que** le dispositif de verrouillage (8-35) établit dans l'état de verrouillage une liaison forte et une liaison à complémentarité de formes entre le dispositif d'accouplement (1) et le dispositif d'accouplement complémentaire (2).

4. Système d'accouplement selon l'une quelconque des revendications précédentes,
**caractérisé en ce**
a) **que** le dispositif de verrouillage (8-35) provoque dans l'état de verrouillage un centrage et/ou une orientation du dispositif d'accouplement (1) et du dispositif d'accouplement complémentaire (2) l'un par rapport à l'autre, et/ou
b) **que** le dispositif d'accouplement (1) et/ou le dispositif d'accouplement complémentaire (2) présente des biais d'entrée qui provoque lors de l'accouplement ensemble un centrage et une orientation du dispositif d'accouplement (1) et du dispositif d'accouplement complémentaire (2) l'un par rapport à l'autre.

5. Système d'accouplement selon l'une quelconque des revendications précédentes,
**caractérisé par**
a) un premier élément d'actionnement (21) qui amène le dispositif de verrouillage (8-35) lors d'un actionnement de l'état de déverrouillage à l'état de verrouillage, et
b) un second élément d'actionnement (27) qui amène le dispositif de verrouillage (8-35) lors d'un actionnement de l'état de verrouillage à l'état de déverrouillage.

6. Système d'accouplement selon la revendication 5,
**caractérisé en ce**
a) **que** le dispositif de verrouillage (8-35) présente un ressort (13) afin d'amener le dispositif de verrouillage (8-35) entraîné par ressort de l'état de déverrouillage à l'état de verrouillage, dans lequel le ressort (13) est au choix dans un état de tension ou dans un état de détente
b) **que** le second élément d'actionnement (27) amène lors d'un actionnement le dispositif de verrouillage (8-35) dans l'état de déverrouillage et amène le ressort (13) dans l'état de tension.

7. Système d'accouplement selon l'une quelconque des revendications précédentes,
**caractérisé en ce**
a) **que** le dispositif de verrouillage (8-35) présente un dispositif de retenue (17-26) qui maintient le ressort (13) sans actionnement par le premier élément d'actionnement (21) dans l'état de tension, et
b) **que** le premier élément d'actionnement (21) détache le dispositif de retenue (17-26) lors d'un actionnement de sorte que le ressort (13) se détende et amène le dispositif de verrouillage (8-35) dans l'état de verrouillage.

8. Système d'accouplement selon la revendication 7,
**caractérisé en ce**
a) **que** le dispositif de retenue (17-26) présente un cliquet de blocage (17) sollicité par ressort afin de maintenir le ressort (13) dans l'état de détente, et
b) **que** le premier élément d'actionnement (21) détache lors d'un actionnement le cliquet de blocage (17) et permet ainsi une détente du ressort (13).

9. Système d'accouplement selon l'une quelconque des revendications précédentes,
**caractérisé en ce**
a) **que** le dispositif de verrouillage (8-35) présente un dispositif de tension (27-35) afin de tendre le ressort (13) par un actionnement du second élément d'actionnement (27),
b) **que** le second élément d'actionnement (27) agit lors d'un actionnement sur le dispositif de tension (27-35) qui tend ensuite le ressort (13).

10. Système d'accouplement selon la revendication 9,
**caractérisé en ce que**
a) que le dispositif de tension (27-35) présente un levier d'entraînement sollicité par ressort (30),
b) que le levier d'entraînement (30) sollicité par ressort permet dans une position détendue une tension du ressort (13), et
c) que le levier d'entraînement (30) sollicité par ressort ne permet dans une position tendue aucune tension du ressort (13).

11. Système d'accouplement selon l'une quelconque des revendications précédentes,
**caractérisé en ce**
a) **que** le système d'accouplement présente un sens de liaison (↕) déterminé, dans lequel le dispositif d'accouplement (1) et le dispositif d'accouplement complémentaire (2) sont déplacés pour l'accouplement et le désaccouplement le long du sens de liaison (↕) l'un par rapport à l'autre,
b) **que** le premier élément d'actionnement (21) servant au verrouillage est une première tige d'actionnement, qui est mobile le long du sens de liaison (↕) et dépasse au moins dans l'état de déverrouillage du dispositif d'accouplement (1),
c) **que** le second élément d'actionnement (27) servant au déverrouillage est une seconde tige d'actionnement qui est mobile le long du sens de liaison (↕) et dépasse au moins dans la position de verrouillage du dispositif d'accouplement (1).

12. Système d'accouplement selon l'une quelconque des revendications précédentes,
**caractérisé en ce**
a) **que** le dispositif de verrouillage (8-35) présente au moins une sphère de verrouillage (9) qui vient en prise dans l'état de verrouillage dans un logement (8),
b) **que** le dispositif de verrouillage (8-35) présente un coulisseau de tension (12) mobile,
b1) dans lequel le coulisseau de tension (12) presse dans l'état de verrouillage la sphère de verrouillage (9) dans le logement (8),
b2) alors que le coulisseau de tension (12) ne presse pas dans l'état de déverrouillage la sphère de verrouillage (9) dans le logement (8).

13. Système d'accouplement selon l'une quelconque des revendications 11 et 12,
**caractérisé en ce**
a) **que** la première tige d'actionnement (21) dépasse du dispositif d'accouplement (1) ou du dispositif d'accouplement complémentaire (2) de sorte que la première tige d'actionnement (21) soit poussée lors de l'accouplement ensemble du dispositif d'accouplement (1) et du dispositif d'accouplement complémentaire (2), et/ou
b) **que** la seconde tige d'actionnement (27) dépasse du dispositif d'accouplement (1) ou du dispositif de d'accouplement complémentaire (2) de sorte que la seconde tige d'actionnement (27) soit poussée indépendamment de l'état d'accouplement lorsqu'elle est placée sur le sol (4).

14. Machine, en particulier presse, avec un système d'accouplement selon l'une quelconque des revendications précédentes.
